(19) **Europäisches Patentamt**
**European Patent Office**
**Office européen des brevets**

(11) **EP 4 186 957 A1**

(12) **EUROPEAN PATENT APPLICATION**
published in accordance with Art. 153(4) EPC

(43) Date of publication:
**31.05.2023 Bulletin 2023/22**

(21) Application number: **21847315.5**

(22) Date of filing: **25.06.2021**

(51) International Patent Classification (IPC):
**C09K 3/18** *(2006.01)* **D06M 15/277** *(2006.01)*

(52) Cooperative Patent Classification (CPC):
**C09K 3/18; D06M 15/277**

(86) International application number:
**PCT/JP2021/024172**

(87) International publication number:
**WO 2022/019047 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.07.2020 JP 2020124144**

(71) Applicant: **AGC INC.**
**Chiyoda-ku,**
**Tokyo 1008405 (JP)**

(72) Inventor: **HARA, Hiroyuki**
**Tokyo 100-8405 (JP)**

(74) Representative: **Müller-Boré & Partner**
**Patentanwälte PartG mbB**
**Friedenheimer Brücke 21**
**80639 München (DE)**

(54) **WATER- AND OIL-REPELLING AGENT COMPOSITION, METHOD FOR PRODUCING SAME, AND ARTICLE**

(57) Provided is a water- and oil-repellent agent composition that is capable of producing an article having a high water pressure resistance and a low water absorption rate. The water- and oil-repellent agent composition contains a fluorine-containing polymer having a unit based on a monomer (a), a unit based on a monomer (b1), a unit based on a monomer (b2), a unit based on a monomer (b3), and a unit based on a monomer (c), wherein relative to all the units that constitute the fluorine-containing polymer, the proportion of the unit based on the monomer (a) is from 70 to 80% by mass, the proportion of the combination of the unit based on the monomer (b1), the unit based on the monomer (b2) and the unit based on the monomer (b3) is from 12 to 28% by mass, and the proportion of the unit based on the monomer (c) is from 2 to 8% by mass. Monomer (a): a compound represented by $(Z-Q)_n X$. Monomer (b1): a monomer not having a polyfluoroalkyl group ($R^f$ group), but having an alkyl group of 22 carbon atoms. Monomer (b2): a monomer not having an $R^f$ group, but having an alkyl group of 20 carbon atoms. Monomer (b3): a monomer not having an $R^f$ group, but having an alkyl group of 18 carbon atoms. Monomer (c): a halogenated olefin.

EP 4 186 957 A1

**Description**

[Technical Field]

The present invention relates to a water- and oil-repellent agent composition, a method for producing the composition, and an article.

[Background Art]

Examples of known methods for imparting water and oil repellency to the surface of an article include methods in which the article is treated with a water- and oil-repellent agent composition prepared by dispersing, in a liquid medium, a copolymer having units based on a monomer having a polyfluoroalkyl group.

Patent Document 1 proposes a water- and oil-repellent agent composition containing a copolymer having a unit based on a monomer having a polyfluoroalkyl group and a unit based on a monomer having a hydrocarbon group of at least 14 carbon atoms, and a copolymer having a unit based on a monomer having a functional group capable of crosslinking with a unit based on a monomer having a polyfluoroalkyl group.

Patent Document 2 proposes a water- and oil-repellent agent composition for an air filter, the composition containing a copolymer having a unit based on a monomer having a polyfluoroalkyl group, a unit based on a monomer having an alkyl group of 20 to 30 carbon atoms, and a unit based on a halogenated olefin.

[Citation List]

[Patent Documents]

[Patent Document 1]
Japanese Unexamined Patent Application, First Publication No. 2007-291373
[Patent Document 2]
Japanese Unexamined Patent Application, First Publication No. 2014-98082

[Summary of Invention]

[Technical Problem]

However, investigations by the inventors of the present invention revealed that air filters that had been treated with the water- and oil-repellent agent composition of Patent Document 1 or 2 sometimes exhibited a low water pressure resistance and a high water absorption rate.

The present invention provides a water- and oil-repellent agent composition capable of producing an article having a high water pressure resistance and a low water absorption rate, a method for producing the composition, and an article that has a high water pressure resistance and a low water absorption rate.

[Solution to Problem]

The present invention has the following aspects.

[1] A water- and oil-repellent agent composition containing a fluorine-containing polymer having a unit based on a monomer (a) described below, a unit based on a monomer (b1) described below, a unit based on a monomer (b2) described below, a unit based on a monomer (b3) described below, and a unit based on a monomer (c) described below, wherein

relative to all the units that constitute the fluorine-containing polymer, the proportion of the unit based on the monomer (a) is from 70 to 80% by mass, the proportion of the combination of the unit based on the monomer (b1), the unit based on the monomer (b2) and the unit based on the monomer (b3) is from 12 to 28% by mass, and the proportion of the unit based on the monomer (c) is from 2 to 8% by mass.

Monomer (a): a compound represented by $(Z-Q)_n X$

wherein Z is a polyfluoroalkyl group of 1 to 6 carbon atoms or a group represented by

$C_jF_{2j}+_1O(CFX^1CF_2O)_kCFX^2-$, j is an integer of 1 to 6, k is an integer of 0 to 10, $X^1$ and $X^2$ each independently represent a fluorine atom or a trifluoromethyl group,

Q is a divalent organic group or a single bond,

n represents 1 or 2, and

when n is 1, X is a group represented by $-CR=CH_2$, $-C(O)OCR=CH_2$, $-OC(O)CR=CH_2$, $-OCH_2-\varphi-CR=CH_2$ or $-OCH=CH_2$, and when n is 2, X is a group represented by $-CH[-(CH_2)_mCR=CH_2]-$, $-CH[-(CH_2)_mC(O)OCR=CH_2]-$, $-CH[-(CH_2)_mOC(O)CR=CH_2]-$ or $-OC(O)CH=CHC(O)O-$, wherein R represents a hydrogen atom, a methyl group or a halogen atom, $\varphi$ represents a phenylene group, and m is an integer of 0 to 4.

Monomer (b1): a monomer not having a polyfluoroalkyl group, but having an alkyl group of 22 carbon atoms.
Monomer (b2): a monomer not having a polyfluoroalkyl group, but having an alkyl group of 20 carbon atoms.
Monomer (b3): a monomer not having a polyfluoroalkyl group, but having an alkyl group of 18 carbon atoms.
Monomer (c): a halogenated olefin.

[2] The water- and oil-repellent agent composition according to [1] above, wherein relative to the total of the unit based on the monomer (b1), the unit based on the monomer (b2) and the unit based on the monomer (b3), the proportion of the unit based on the monomer (b1) is from 60 to 80% by mass, the proportion of the unit based on the monomer (b2) is from 10 to 20% by mass, and the proportion of the unit based on the monomer (b3) is from 10 to 20% by mass.

[3] The water- and oil-repellent agent composition according to [1] or [2] above, wherein each of the monomer (b1), the monomer (b2) and the monomer (b3) is an acrylate or a methacrylate.

[4] The water- and oil-repellent agent composition according to any one of [1] to [3] above, wherein Z in the monomer (a) is a polyfluoroalkyl group of 1 to 6 carbon atoms, n is 1, and X is a group represented by $-CR=CH_2$ or $-OC(O)CR=CH_2$.

[5] The water- and oil-repellent agent composition according to [4] above, wherein Z in the monomer (a) is a polyfluoroalkyl group of 6 carbon atoms.

[6] The water- and oil-repellent agent composition according to any one of [1] to [5] above, wherein the composition does not contain a cationic surfactant.

[7] The water- and oil-repellent agent composition according to any one of [1] to [6] above, wherein the composition does not contain any organic solvent with a boiling point at atmospheric pressure of 280°C or lower.

[8] A method for producing a water- and oil-repellent agent composition containing a fluorine-containing polymer by polymerizing a monomer component in the presence of a polymerization initiator, wherein

the monomer component includes a monomer (a) described below, a monomer (b1) described below, a monomer (b2) described below, a monomer (b3) described below and a monomer (c) described below,

relative to the total amount of the monomer component, the proportion of the monomer (a) is from 70 to 80% by mass, the proportion of the combination of the monomer (b1), the monomer (b2) and the monomer (b3) is from 12 to 28% by mass, and the proportion of the monomer (c) is from 2 to 8% by mass.

Monomer (a): a compound represented by $(Z-Q)_nX$

wherein Z is a polyfluoroalkyl group of 1 to 6 carbon atoms or a group represented by $C_jF_{2j}+_1O(CFX^1CF_2O)_kCFX^2-$, j is an integer of 1 to 6, k is an integer of 0 to 10, $X^1$ and $X^2$ each independently represent a fluorine atom or a trifluoromethyl group,

Q is a divalent organic group or a single bond,

n represents 1 or 2, and

when n is 1, X is a group represented by $-CR=CH_2$, $-C(O)OCR=CH_2$, $-OC(O)CR=CH_2$, $-OCH_2-\varphi-CR=CH_2$ or $-OCH=CH_2$, and when n is 2, X is a group represented by $-CH[-(CH_2)_mCR=CH_2]-$, $-CH[-(CH_2)_mC(O)OCR=CH_2]$ -, $-CH[-(CH_2)_mOC(O)CR=CH_2]-$ or $-OC(O)CH=CHC(O)O-$, wherein R represents a hydrogen atom, a methyl group or a halogen atom, $\varphi$ represents a phenylene group, and m is an integer of 0 to 4.

Monomer (b1): a monomer not having a polyfluoroalkyl group, but having an alkyl group of 22 carbon atoms.
Monomer (b2): a monomer not having a polyfluoroalkyl group, but having an alkyl group of 20 carbon atoms.
Monomer (b3): a monomer not having a polyfluoroalkyl group, but having an alkyl group of 18 carbon atoms.
Monomer (c): a halogenated olefin.

[9] The method for producing a water- and oil-repellent agent composition according to [8] above, wherein relative to the combination of the monomer (b1), the monomer (b2) and the monomer (b3), the proportion of the monomer (b1) is from 60 to 80% by mass, the proportion of the monomer (b2) is from 10 to 20% by mass, and the proportion of the monomer (b3) is from 10 to 20% by mass.

[10] The method for producing a water- and oil-repellent agent composition according to [8] or [9] above, wherein each of the monomer (b1), the monomer (b2) and the monomer (b3) is an acrylate or a methacrylate.

[11] The method for producing a water- and oil-repellent agent composition according to [9] or [10] above, wherein the monomer component is polymerized in a medium containing water, in the presence of the polymerization initiator and a surfactant.

[12] The method for producing a water- and oil-repellent agent composition according to [11] above, wherein the surfactant does not include a cationic surfactant.

[13] The method for producing a water- and oil-repellent agent composition according to [11] or [12] above, wherein the medium does not contain any organic solvent with a boiling point at atmospheric pressure of 280°C or lower.

[14] An article that has been treated with the water- and oil-repellent agent composition according to any one of [1] to [7] above.

[15] The article according to [14] above, wherein the article is an air filter.

[Advantageous Effects of Invention]

According to the water- and oil-repellent agent composition of the present invention, an article having a high water pressure resistance and a low water absorption rate can be obtained.

According to the method for producing a water- and oil-repellent agent composition of the present invention, a water- and oil-repellent agent composition can be produced that is capable of yielding an article having a high water pressure resistance and a low water absorption rate.

An article of the present invention has a high water pressure resistance and a low water absorption rate.

[Description of Embodiments]

The meanings and definitions of terms used in the present invention are described below.

A "unit based on a monomer" is a generic term for a group of atoms formed directly as a result of polymerization of one molecule of the monomer, and atom groupings obtained by chemically modifying a portion of that group of atoms.

The term "(meth)acrylate" is a generic term for both acrylate and methacrylate. Similarly, "(meth)acryloyl" is a generic term for acryloyl and methacryloyl, and "(meth)acrylamide" is a generic term for acrylamide and methacrylamide.

The number average molecular weight (hereinafter also abbreviated as "Mn") and the weight average molecular weight (hereinafter also abbreviated as "Mw") of a polymer are polymethyl methacrylate-equivalent molecular weights measured by gel permeation chromatography (hereinafter also abbreviated as "GPC").

Solid mass concentrations are calculated as (solid mass / sample mass) $\times$ 100, wherein the mass of a sample prior to heating is deemed the sample mass, and the mass following drying of the sample for four hours in a 120°C convection dryer is deemed the solid mass.

Numerical ranges specified using the expression "a to b" mean a range that includes the numerical values before and after the "to" as the lower limit value and the upper limit value respectively.

[Water- and Oil-Repellent Agent Composition]

The water- and oil-repellent agent composition of the present invention (hereinafter also referred to as the "composition of the invention") contains a specific fluorine-containing polymer (hereinafter also referred to as the "polymer A").

The composition of the invention typically contains a medium.

The composition of the invention may also contain a surfactant, if necessary.

The composition of the invention may also contain one or more other components, if necessary.

(Polymer A)

The polymer A has a unit based on a monomer (a) (hereinafter also referred to as the "unit (a)"), a unit based on a monomer (b1) (hereinafter also referred to as the "unit (b1)"), a unit based on a monomer (b2) (hereinafter also referred to as the "unit (b2)"), a unit based on a monomer (b3) (hereinafter also referred to as the "unit (b3)"), and a unit based on a monomer (c) (hereinafter also referred to as the "unit (c)").

The polymer A may, if necessary, also have a unit based on another monomer.

<Monomer (a)>

The monomer (a) is a compound represented by $(Z-Q)_nX$.

Z is a polyfluoroalkyl group of 1 to 6 carbon atoms (hereinafter, a polyfluoroalkyl group may also be abbreviated as an "$R^f$ group") or a group represented by $C_jF_{2j}+_1O(CFX^1CF_2O)_kCFX^2-$, wherein j is an integer of 1 to 6, k is an integer of 0 to 10, and $X^1$ and $X^2$ each independently represent a fluorine atom or a trifluoromethyl group.

A perfluoroalkyl group (hereinafter also abbreviated as an "$R^F$ group") is preferred as the $R^f$ group. The $R^f$ group may be linear or branched, but is preferably linear.

Examples of Z include $F(CF_2)_4-$, $F(CF_2)_5-$, $F(CF_2)_6-$, $(CF_3)_2CF(CF_2)_2-$, and $C_jF_{2j+1}O[CF(CF_3)CF_2O]_kCF(CF_3)-$.

Q is a divalent organic group or a single bond. In the monomer (a), the boundary between Z and Q is determined so as to minimize the number of carbon atoms in Z.

The divalent organic group is preferably an alkylene group or an alkenylene group, and is more preferably an alkylene group. The alkylene group may be linear or branched. The alkylene group may have -O-, -NH-, -CO-, -S-, -$SO_2$- or -$CX^3=CX^4$-(wherein $X^3$ and $X^4$ each independently represent a hydrogen atom or a methyl group), either between two carbon atoms or at the terminal that is bonded to Z.

Examples of Q include -$CH_2$-, -$CH_2CH_2$-, -$(CH_2)_3$-, -$CH_2CH_2CH(CH_3)$-,-CH=CH-$CH_2$-, -S-$CH_2CH_2$-, -$CH_2CH_2$-S-$CH_2CH_2$-, -$CH_2CH_2$-$SO_2$-$CH_2CH_2$-, and -$X^5$-OC(O)NH-A-NHC(O)O-$(C_pH_{2p})$-.

In the above formula, p is an integer of 2 to 30, A is a symmetrical alkylene group, arylene group or aralkylene group with no branching, and $X^5$ represents -$SO^2NX^6$-$C_dH_{2d}$-, -$CONHC_dH_{2d}$-, -CH($R^{F1}$)-$C_eH_{2e}$- or -$C_qH_{2q}$-, wherein $X^6$ represents a hydrogen atom or an alkyl group of 1 to 4 carbon atoms, d is an integer of 2 to 8, $R^{F1}$ represents an $R^F$ group of 1 to 20 carbon atoms, e is an integer of 0 to 6, and q is an integer of 1 to 20.

$R^{F1}$ is preferably an $R^F$ group of 1 to 6 carbon atoms, and more preferably an $R^F$ group of 4 to 6 carbon atoms.

The value of n is 1 or 2.

When n is 1, X is a group represented by -CR=$CH_2$, -C(O)OCR=$CH_2$, - OC(O)CR=$CH_2$, -$OCH_2$-φ-CR=$CH_2$ or -OCH=$CH_2$, and when n is 2, X is a group represented by -CH[-$(CH_2)_m$CR=$CH_2$]-, -CH[-$(CH_2)_m$C(O)OCR=$CH_2$]-, -CH[-$(CH_2)_m$OC(O)CR=$CH_2$]- or -OC(O)CH=CHC(O)O-.

In the above formulas, R represents a hydrogen atom, a methyl group or a halogen atom, φ represents a phenylene group, and m is an integer of 0 to 4.

From the viewpoints of the polymerizability with other monomers, the flexibility of the coating film containing the polymer A, the adhesiveness of the polymer A to articles, the dispersibility in media, and the ease of conducting emulsion polymerization, the monomer (a) is preferably an olefin or (meth)acrylate having an $R^F$ group of 1 to 6 carbon atoms, and is more preferably an olefin or (meth)acrylate having an $R^F$ group of 4 to 6 carbon atoms. Specifically, compounds in which Z is an $R^F$ group of 1 to 6 carbon atoms, Q is an alkylene group of 1 to 4 carbon atoms, n is 1, and X is-CR=$CH_2$ or -C(O)OCR=$CH_2$ are preferred, and compounds in which Z is an $R^F$ group of 4 to 6 carbon atoms, Q is an alkylene group of 1 to 4 carbon atoms, n is 1, and X is-CR=$CH_2$ or -C(O)OCR=$CH_2$ are more preferred.

Combinations of two or more types of the monomer (a) may also be used.

<Monomer (b1)>

The monomer (b1) is a monomer not having an $R^f$ group, but having an alkyl group of 22 carbon atoms.

Examples of the monomer (b1) include (meth)acrylates having an alkyl group of 22 carbon atoms, (meth)acrylamides having an alkyl group of 22 carbon atoms, vinyl ethers having an alkyl group of 22 carbon atoms, and vinyl esters having an alkyl group of 22 carbon atoms. Among these, (meth)acrylates having an alkyl group of 22 carbon atoms are preferred, and behenyl (meth)acrylate is particularly preferred.

<Monomer (b2)>

The monomer (b2) is a monomer not having an $R^f$ group, but having an alkyl group of 20 carbon atoms.

Examples of the monomer (b2) include (meth)acrylates having an alkyl group of 20 carbon atoms, (meth)acrylamides having an alkyl group of 20 carbon atoms, vinyl ethers having an alkyl group of 20 carbon atoms, and vinyl esters having an alkyl group of 20 carbon atoms. Among these, (meth)acrylates having an alkyl group of 20 carbon atoms are preferred, and arachidyl (meth)acrylate is particularly preferred.

<Monomer (b3)>

The monomer (b3) is a monomer not having an $R^f$ group, but having an alkyl group of 18 carbon atoms.

Examples of the monomer (b2) include (meth)acrylates having an alkyl group of 18 carbon atoms, (meth)acrylamides having an alkyl group of 18 carbon atoms, vinyl ethers having an alkyl group of 18 carbon atoms, and vinyl esters having an alkyl group of 18 carbon atoms. Among these, (meth)acrylates having an alkyl group of 18 carbon atoms are preferred, and stearyl (meth)acrylate is particularly preferred.

Each of the monomer (b1), the monomer (b2) and the monomer (b3) may also be a combination of two or more types of monomer.

From the viewpoint of facilitating a high water pressure resistance and a low water absorption rate for articles that have been processed with the water- and oil-repellent agent composition, each of the monomer (b1), the monomer (b2) and the monomer (b3) is preferably an acrylate or a methacrylate.

<Monomer (c)>

The monomer (c) is a halogenated olefin.

The monomer (c) is preferably a chlorinated olefin or a fluorinated olefin, and specific examples include vinyl chloride, vinylidene chloride, tetrafluoroethylene, and vinylidene fluoride. Among these, in terms of the adhesion to substrates, vinyl chloride and vinylidene chloride are preferred.

Combinations of two or more types of the monomer (c) may also be used.

<Other Monomers>

Other monomers are monomers other than the monomer (a), the monomer (b1), the monomer (b2), the monomer (b3) and the monomer (c). Any monomer that can copolymerize with the monomer (a), the monomer (b1), the monomer (b2), the monomer (b3) and the monomer (c) may be used as one of these other monomers, and examples include (meth)acrylates, (meth)acrylamides, vinyl ethers and vinyl esters that are outside the definitions of the monomer (a), the monomer (b1), the monomer (b2), the monomer (b3) and the monomer (c).

Examples of other monomers include methyl (meth)acrylate, butyl (meth)acrylate, 2-hydroxyethyl (meth)acrylate, methylolacrylamide, cyclohexyl (meth)acrylate, isobornyl (meth)acrylate, and 3,5-dimethylpyrazole adducts of 2-isocyanatoethyl (meth)acrylate.

The proportion of the unit (a) relative to all of the units that constitute the polymer A is within a range from 70 to 80% by mass, and preferably from 72 to 78% by mass. Provided the proportion of the unit (a) falls within the above range, an article treated with the composition of the invention can be imparted with a high water pressure resistance and a low water absorption rate.

The proportion of the combination of the unit (b1), the unit (b2) and the unit (b3) relative to all of the units that constitute the polymer A is within a range from 12 to 28% by mass, preferably from 14 to 26% by mass, and may be from 14 to 25% by mass. Provided the proportion of the combination of the unit (b1), the unit (b2) and the unit (b3) falls within the above range, an article treated with the composition of the invention can be imparted with a high water pressure resistance and a low water absorption rate.

The proportion of the unit (b1) relative to the combination of the unit (b1), the unit (b2) and the unit (b3) is preferably within a range from 60 to 80% by mass, and more preferably from 64 to 76% by mass.

The proportion of the unit (b2) relative to the combination of the unit (b1), the unit (b2) and the unit (b3) is preferably within a range from 10 to 20% by mass, and more preferably from 12 to 18% by mass.

The proportion of the unit (b3) relative to the combination of the unit (b1), the unit (b2) and the unit (b3) is preferably within a range from 10 to 20% by mass, and more preferably from 12 to 18% by mass.

Provided the proportions of the unit (b1), the unit (b2) and the unit (b3) fall within the respective ranges described above, an article treated with the composition of the invention can be imparted with an even higher water pressure resistance and a lower water absorption rate.

Relative to the combination of the unit (b1), the unit (b2) and the unit (b3), it is preferable that the proportion of the unit (b1) is from 60 to 80% by mass, the proportion of the unit (b2) is from 10 to 20% by mass and the proportion of the unit (b3) is from 10 to 20% by mass, and it is more preferable that the proportion of the unit (b1) is from 64 to 76% by mass, the proportion of the unit (b2) is from 12 to 18% by mass and the proportion of the unit (b3) is from 12 to 18% by mass. Provided the proportions of the unit (b1), the unit (b2) and the unit (b3) fall within these respective ranges, an article treated with the composition of the invention can be imparted with an even higher water pressure resistance and a lower water absorption rate.

The proportion of the unit (c) relative to all of the units that constitute the polymer A is within a range from 2 to 8% by mass, preferably from 2 to 7% by mass, and may be from 3 to 7% by mass. Provided the proportion of the unit (c) is at least as high as the above lower limit, the adhesiveness of the polymer A to substrates is excellent, whereas provided the proportion is not higher than the above upper limit, an article treated with the composition of the invention can be imparted with a high water pressure resistance and a low water absorption rate.

The proportion of each unit can be calculated from by $^1$H-NMR and the reactivity of each unit component as determined by gas chromatography. The proportion of each unit may also be calculated based on the amount of each monomer component used during production of the polymer A.

The Mn of the polymer A is preferably within a range from 5,000 to 100,000, more preferably from 10,000 to 80,000, and even more preferably from 15,000 to 50,000. Provided the Mn of the polymer A is at least as high as the above lower limit, an article treated with the composition of the invention can be imparted with a higher water pressure resistance and a lower water absorption rate, whereas provided the Mn is not higher than the above upper limit, the film formability is superior.

The Mw of the polymer A is preferably within a range from 10,000 to 300,000, more preferably from 20,000 to 200,000, and even more preferably from 30,000 to 150,000. Provided the Mw of the polymer A is at least as high as the above lower limit, an article treated with the composition of the invention can be imparted with a higher water pressure resistance and a lower water absorption rate, whereas provided the Mw is not higher than the above upper limit, the film formability is superior.

The polymer A preferably satisfies at least one of the Mn range and the Mw range described above, and more preferably satisfies both ranges.

(Medium)

Examples of the medium include aqueous media, and media other than aqueous media, although an aqueous medium is preferred.

An aqueous medium is a medium that contains water.

Examples of the aqueous medium include water, and water that contains a water-soluble organic solvent.

A water-soluble organic solvent is an organic solvent that is miscible with water in an arbitrary proportion. The water-soluble organic solvent is preferably at least one type of solvent selected from the group consisting of alcohols (but excluding ether alcohols), ether alcohols, and aprotic polar solvents. Examples of the alcohols include t-butanol and propylene glycol. Examples of the ether alcohols include 3-methoxymethylbutanol, dipropylene glycol, dipropylene glycol monomethyl ether, and tripropylene glycol. Examples of the aprotic polar solvents include N,N-dimethylformamide, dimethyl sulfoxide, tetrahydrofuran (hereinafter also abbreviated as "THF"), acetonitrile, acetone, 3-methoxy-N,N-dimethylpropanamide, 3-butoxy-N,N-dimethylpropanamide, 3-methoxy-3-methyl-1-butanol, triethylene glycol dimethyl ether, and tetraethylene glycol dimethyl ether.

In those cases where the aqueous medium contains a water-soluble organic solvent, the amount of the water-soluble organic solvent, per 100 parts by mass of water, is preferably within a range from 1 to 80 parts by mass, and more preferably from 5 to 60 parts by mass.

Examples of media besides aqueous media include non-aqueous media. Examples of non-aqueous media include glycols, glycol ethers (but excluding ether alcohols), hydrocarbons, ketones, esters, ethers (but excluding ether alcohols and glycol ethers), and halogenated compounds. The medium may also contain two or more types of these media.

Examples of the glycols and glycol ethers include diethylene glycol monobutyl ether acetate, ethylene glycol monoethyl ether acetate, ethylene glycol monobutyl ether acetate, propylene glycol monomethyl ether acetate, propylene glycol dimethyl ether, and dipropylene glycol dimethyl ether.

Examples of the hydrocarbons include aliphatic hydrocarbons, alicyclic hydrocarbons and aromatic hydrocarbons. Examples of the aliphatic hydrocarbons include pentane, 2-methylbutane, 3-methylpentane, hexane, 2,2-dimethylbutane, 2,3-dimethylbutane, heptane, octane, 2,2,4-trimethylpentane, 2,2,3-trimethylhexane, decane, undecane, dodecane, 2,2,4,6,6-pentamethylheptane, tridecane, tetradecane, and hexadecane. Examples of the alicyclic hydrocarbons include cyclopentane, methylcyclopentane, cyclohexane, methylcyclohexane, and ethylcyclohexane. Examples of the aromatic hydrocarbons include benzene, toluene and xylene.

Examples of the ketones include methyl ethyl ketone, 2-pentanone, 3-pentanone, 2-hexanone, and methyl isobutyl ketone.

Examples of the esters include methyl acetate, ethyl acetate, butyl acetate, and methyl propionate.

Examples of the ethers include diisopropyl ether.

Examples of the halogenated compounds include halogenated hydrocarbons and halogenated ethers. Examples of the halogenated hydrocarbons include hydrochlorofluorocarbons, hydrofluorocarbons, and hydrobromocarbons. Examples of the halogenated ethers include hydrofluoroethers. Examples of these hydrofluoroethers include segregated hydrofluoroethers and non-segregated hydrofluoroethers. A segregated hydrofluoroether is a compound in which a perfluoroalkyl group or perfluoroalkylene group and an alkyl group or alkylene group are bonded together via an etheric oxygen atom. A non-segregated hydrofluoroether is a hydrofluoroether containing a partially fluorinated alkyl group or alkylene group.

In terms of suppressing outgas from articles such as air filters, the medium preferably does not contain any organic solvent with a boiling point at atmospheric pressure of 280°C or lower, and specifically, preferably does not contain glycol-based hydrophilic media such as dipropylene glycol, dipropylene glycol monomethyl ether, tripropylene glycol, and tetraethylene glycol dimethyl ether. It is particularly desirable that the medium is water.

(Surfactant)

The surfactant is preferably a surfactant that does not have a fluorine atom.

Examples of the surfactant include anionic surfactants, nonionic surfactants, cationic surfactants and amphoteric surfactants.

In terms of achieving superior dispersion stability of the aqueous dispersion containing the polymer A, the surfactant is preferably a nonionic surfactant used by itself, a combination of a nonionic surfactant with either a cationic surfactant or an amphoteric surfactant, or an anionic surfactant used by itself.

Examples of the nonionic surfactant include the surfactants $s^1$ to $s^6$ disclosed in paragraphs [0067] to [0095] of Japanese Unexamined Patent Application, First Publication No. 2009-215370, and the surfactants $s^1$ to $s^3$ are preferred.

A polyoxyethylene alkyl ether is preferred as the surfactant $s^1$.

An acetylene glycol ethylene oxide adduct is preferred as the surfactant $s^2$.

A polyoxyethylene polyoxypropylene glycol is preferred as the surfactant $s^3$.

Combinations of two or more types of nonionic surfactant may also be used. For example, a combination of the surfactant $s^1$ and the surfactant $s^2$ may be used.

Examples of the cationic surfactant include the surfactants $s^7$ disclosed in paragraphs [0096] to [0100] of Japanese Unexamined Patent Application, First Publication No. 2009-215370.

In terms of the surfactant $s^7$, an ammonium salt in which at least one of the hydrogen atoms bonded to the nitrogen atom has been substituted with an alkyl group, an alkenyl group, or a polyoxyalkylene chain having a hydroxyl group at the terminal is preferred, and compounds $s^{71}$ represented by formula $s^{71}$ shown below are particularly preferred.

$$[(R^{21})_4 N^+] \cdot X^- \qquad \text{Formula } s^{71}$$

$R^{21}$ represents a hydrogen atom, an alkyl group of 1 to 22 carbon atoms, an alkenyl group of 2 to 22 carbon atoms, a fluoroalkyl group of 1 to 9 carbon atoms, or a polyoxyalkylene chain having a hydroxyl group at the terminal. The four $R^{21}$ groups may be the same or different, provided all four $R^{21}$ groups are not hydrogen atoms. $X^-$ represents a counter ion.

$X^-$ is preferably a chloride ion, ethyl sulfate ion or acetate ion.

Examples of the compound $s^{71}$ include monostearyl trimethyl ammonium chloride, monostearyl dimethyl monoethyl ammonium ethyl sulfate, mono(stearyl) monomethyl di(polyethylene glycol) ammonium chloride, monofluorohexyl trimethyl ammonium chloride, di(beef tallow alkyl) dimethyl ammonium chloride, and dimethyl mono(coconut amine) acetate.

Combinations of two or more types of cationic surfactant may also be used.

Examples of the amphoteric surfactant include the surfactants $s^8$ disclosed in paragraphs [0101] to [0102] of Japanese Unexamined Patent Application, First Publication No. 2009-215370.

Combinations of two or more types of amphoteric surfactant may also be used.

The proportion of cationic surfactant relative to 100% by mass of the composition of the invention is preferably not more than 0.5% by mass to ensure better suppression of aggregation or precipitation in those cases when the surfactant is used in combination with an anionic co-agent, and an amount of 0% by mass is particularly preferred. In other words, it is particularly preferred that the composition of the invention does not contain a cationic surfactant.

Water- and oil-repellent agent compositions, and particularly water- and oil-repellent agent compositions used for air filters, are sometimes used in combination with a co-agent containing an anionic acrylic resin. In such cases, it is desirable that the water- and oil-repellent agent composition exhibits superior compatibility with the anionic acrylic resin (namely, does not cause aggregation or precipitation of the anionic acrylic resin). Cationic surfactants undergo ionic interactions with anionic acrylic resins, meaning there is a possibility of aggregation or precipitation of the anionic acrylic resin.

Nonionic surfactants and anionic surfactants do not undergo ionic interactions with anionic acrylic resins. Accordingly, a nonionic surfactant or anionic surfactant is preferred as the surfactant.

(Other Components)

Examples of other components that may be used include fluorine-containing polymers besides the polymer A, non-fluorine-based polymers, non-fluorine-based water- and oil-repellent agents, water-soluble polymer resins (for example, hydrophilic polyesters and derivatives thereof, hydrophilic polyethylene glycols and derivatives thereof, hydrophilic polyamines and derivatives thereof, and hydrophilic polyvinyl alcohols and derivatives thereof), crosslinking agents, penetrants (for example, nonionic surfactants having a left-right symmetrical structure with a central acetylene group, the DISPANOL (a registered trademark) series manufactured by NOF Corporation), colloidal silica (for example, the SNOWTEX (a registered trademark) series manufactured by Nissan Chemical Industries, Ltd., and the ADELITE series manufactured by ADEKA Corporation), antifoaming agents (for example, the OLFINE (a registered trademark) series manufactured by Nissin Chemical Industry Co., Ltd., and the FS Antifoam series manufactured by Dow Corning Toray Co., Ltd.), film-forming assistants, insecticides, fungicides, preservatives, flame retardants, antistatic agents (for example, the DELECTOL series manufactured by Meisei Chemical Works, Ltd.), anti-wrinkle agents, softeners (for example, silicone emulsions, polyethylene wax emulsions, and polyamide wax emulsions), pH modifiers (for example, diethanolamine, triethanolamine, acetic acid and citric acid), fatty acid amides (for example, the compounds disclosed in Japanese Unexamined Patent Application, First Publication No. 2014-98082), acrylic resins, and urethane resins. Combinations of two or more types of these components may also be used.

In terms of suppressing outgas from the article, these other components preferably do not contain any volatile components that may volatilize at the treatment temperatures used during treatment of the article.

In those cases where the composition of the invention contains a medium, the amount of the medium may be selected appropriately in accordance with the desired solid mass concentration for the composition of the invention.

The solid mass concentration of the composition of the invention immediately following production of the composition is preferably within a range from 20 to 70% by mass, and more preferably from 30 to 60% by mass.

The solid mass concentration for the composition of the invention in those cases where the composition is used for the treatment of an article is preferably within a range from 0.1 to 7% by mass, and more preferably from 0.2 to 5% by mass.

In those cases where the composition of the invention contains a surfactant, the amount of the surfactant is preferably within a range from 1 to 6 parts by mass per 100 parts by mass of the polymer A. Provided the amount of the surfactant is at least as large as the above lower limit, the dispersion stability of the composition of the invention is excellent. Provided the amount of the surfactant is not more than the above upper limit, any adverse effects on the water and oil repellency, water pressure resistance and water absorption rate of articles treated with the composition of the invention can be reduced.

One preferred aspect of the composition of the invention is a fluorine-containing polymer dispersion containing the polymer A, an aqueous medium and a surfactant. The fluorine-containing polymer dispersion includes dispersions obtained using the method for producing a water- and oil-repellent agent composition described below, as well as dispersions that have been further diluted with an arbitrary medium for treatment of an article.

In the fluorine-containing polymer dispersion, the polymer A is dispersed in the aqueous medium as emulsified particles.

In the fluorine-containing polymer dispersion, the average particle size of the emulsified particles of the polymer A is preferably within a range from 50 to 500 nm, more preferably from 70 to 400 nm, and even more preferably from 80 to 300 nm. Provided this average particle size is not larger than the above upper limit, articles treated with the emulsified particles of the polymer A can be imparted with a higher water pressure resistance and a lower water absorption rate, and the dispersibility of the emulsified particles of the polymer A is also superior. Provided the average particle size is at least as large as the above lower limit, the emulsified particles of the polymer A are more stable relative to mechanical shearing.

The average particle size of the emulsified particles of the polymer A is calculated by cumulant method analysis from the autocorrelation function obtained by dynamic light scattering from a sample prepared by diluting the dispersion of the polymer A with water to obtain a solid mass concentration of 1% by mass.

[Method for Producing Water- and Oil-Repellent Agent Composition]

The method for producing a water- and oil-repellent agent composition according to the present invention (hereinafter also referred to as the "present production method") is a method in which a monomer component is polymerized in the presence of polymerization initiator to obtain a water- and oil-repellent agent composition containing a polymer A.

The monomer component contains a monomer (a), a monomer (b1), a monomer (b2), a monomer (b3) and a monomer (c), and may also contain one or more other monomers.

The monomer (a), the monomer (b1), the monomer (b2), the monomer (b3), the monomer (c) and the other monomers are as described above.

The proportion of the monomer (a) relative to the total monomer component is within a range from 70 to 80% by mass, and preferably from 72 to 78% by mass. Provided the proportion of the monomer (a) falls within the above range, an article treated with a water- and oil-repellent agent composition obtained using the present production method can be imparted with a high water pressure resistance and a low water absorption rate.

The proportion of the combination of the monomer (b1), the monomer (b2) and the monomer (b3) relative to the total monomer component is within a range from 12 to 28% by mass, preferably from 14 to 26% by mass, and may be from 14 to 25% by mass. Provided the proportion of the combination of the monomer (b1), the monomer (b2) and the monomer (b3) falls within the above range, an article treated with the composition of the invention can be imparted with a high water pressure resistance and a low water absorption rate.

The proportion of the monomer (b1) relative to the combination of the monomer (b1), the monomer (b2) and the monomer (b3) is preferably within a range from 60 to 80% by mass, and more preferably from 64 to 76% by mass.

The proportion of the monomer (b2) relative to the combination of the monomer (b1), the monomer (b2) and the monomer (b3) is preferably within a range from 10 to 20% by mass, and more preferably from 12 to 18% by mass.

The proportion of the monomer (b3) relative to the combination of the monomer (b1), the monomer (b2) and the monomer (b3) is preferably within a range from 10 to 20% by mass, and more preferably from 12 to 18% by mass.

Provided the proportions of the monomer (b1), the monomer (b2) and the monomer (b3) fall within the respective ranges described above, an article treated with the composition of the invention can be imparted with an even higher water pressure resistance and a lower water absorption rate.

Relative to the combination of the monomer (b1), the monomer (b2) and the monomer (b3), it is preferable that the proportion of the monomer (b1) is from 60 to 80% by mass, the proportion of the monomer (b2) is from 10 to 20% by mass and the proportion of the monomer (b3) is from 10 to 20% by mass, and it is more preferable that the proportion of the monomer (b1) is from 64 to 76% by mass, the proportion of the monomer (b2) is from 12 to 18% by mass and the proportion of the monomer (b3) is from 12 to 18% by mass. Provided the proportions of the monomer (b1), the monomer (b2) and the monomer (b3) fall within these respective ranges, an article treated with the composition of the invention can be imparted with an even higher water pressure resistance and a lower water absorption rate.

The proportion of the monomer (c) relative to the total monomer component is within a range from 2 to 8% by mass, preferably from 2 to 7% by mass, and may be from 3 to 7% by mass. Provided the proportion of the monomer (c) is at least as high as the above lower limit, the adhesiveness of the polymer A to substrates is excellent, whereas provided the proportion is not higher than the above upper limit, an article treated with the composition of the invention can be imparted with an even higher water pressure resistance and a lower water absorption rate.

Examples of the polymerization initiator include thermal polymerization initiators, photopolymerization initiators, radiation polymerization initiators, radical polymerization initiators and ionic polymerization initiators, and a radical polymerization initiator is preferred. For the radical polymerization initiator, for example, an azo-based polymerization initiator, peroxide-based polymerization initiator or redox-based polymerization initiator may be used depending on the polymerization temperature. An azo-based compound is preferred as the radical polymerization initiator, and a salt of an azo-based compound is even more preferred. The polymerization temperature is preferably within a range from 20 to 150°C.

The amount added of the polymerization initiator, per 100 parts by mass of the monomer component, is preferably within a range from 0.1 to 5 parts by mass, and more preferably from 0.1 to 3 parts by mass.

A molecular weight modifier may be used during the polymerization of the monomer component. For example, aromatic compounds, mercapto alcohols, mercapto carboxylic acids and alkyl mercaptans are preferred as the molecular weight modifier, and a mercapto carboxylic acid or an alkyl mercaptan is particularly preferred. Specific examples of the molecular weight modifier include mercaptoethanol, mercaptopropionic acid, n-octylmercaptan, n-dodecylmercaptan, tert-dodecylmercaptan, stearylmercaptan, and $\alpha$-methylstyrene dimer ($CH_2=C(Ph)CH_2C(CH_3)_2Ph$, wherein Ph represents a phenyl group).

The amount added of the molecular weight modifier is preferably not more than 5 parts by mass per 100 parts by mass of the monomer component, and is more preferably not more than 2 parts by mass and may be 0 parts by mass.

Examples of the method used for polymerizing the monomer component include emulsion polymerization methods, solution polymerization methods, suspension polymerization methods and bulk polymerization methods. Among these, an emulsion polymerization method is preferred. By polymerizing the monomer component using an emulsion polymerization method, the polymerization can be conducted without using any medium besides the aqueous medium, the conversion rate of the monomer component to the polymer A can be increased, and the molecular weight (Mn, Mw) of the polymer A can also be increased.

In the emulsion polymerization method, for example, the monomer component is polymerized in the aqueous medium in the presence of a polymerization initiator and a surfactant. The surfactant and the aqueous medium are as described above.

In order to polymerize the monomer component in the aqueous medium in the presence of the polymerization initiator and the surfactant, first, an emulsion containing the aqueous medium, the monomer component, the polymerization initiator and the surfactant is prepared. The emulsion may, if necessary, also contain a molecular weight modifier.

The emulsion can be prepared by mixing the aqueous medium, the monomer component and if necessary the surfactant, dispersing the mixture using a homogenizer or high-pressure emulsifier or the like, and then adding the polymerization initiator.

The concentration of the monomer component in the emulsion is preferably within a range from 20 to 60% by mass, and more preferably from 30 to 50% by mass. Provided the concentration of the monomer component in the emulsion falls within this range, the conversion rate of the monomer component to the polymer A during polymerization of the monomer component can be increased, and the molecular weight of the polymer A can also be increased satisfactorily.

The amount of the surfactant in the emulsion is preferably within a range from 1 to 6 parts by mass per 100 parts by mass of the monomer component. Provided the amount of the surfactant is at least as large as the above lower limit, the dispersion stability of the emulsion is excellent. Provided the amount of the surfactant is not more than the above upper limit, any adverse effects, caused by the surfactant, on the water and oil repellency, water pressure resistance and water absorption rate of articles treated with a composition containing the polymer A can be reduced.

By polymerizing the monomer component in the emulsion, a dispersion of the polymer A is obtained.

The polymerization temperature is, for example, within a range from 20 to 90°C.

At the completion of the polymerization, the conversion rate of the monomer component to the polymer A is preferably at least 80%, and more preferably 90% or higher. By increasing the conversion rate, the molecular weight of the polymer A can also be increased, and the water and oil repellency can also be improved. Further, by ensuring a high conversion rate, any deterioration in performance due to residual monomers can be suppressed and the amount of fluorine atoms contained within the polymer A can be increased, resulting in an improvement in the water and oil repellency. In order to achieve a conversion rate of at least 80%, the emulsion composition and the polymerization time are preferably optimized.

The obtained dispersion may be used, without modification, as the composition of the invention, or may be diluted with a medium to adjust the solid mass concentration to obtain the composition of the invention. Other components may also be added to the composition of the invention.

[Article]

An article of the present invention is an article that has been treated using the composition of the invention.

Examples of the article (hereinafter also referred to as a "substrate") treated using the composition of the invention include fibers, fibrous fabrics (such as fibrous woven fabrics, fibrous knitted fabrics, nonwoven fabrics and raised fabrics), fibrous products that include a fibrous fabric (including clothing such as ski wear, rainwear, coats, jackets, wind breakers, down jackets, sportswear, work clothing, uniforms and protective clothing, as well as day packs, backpacks, bags, tents and zelts), as well as glass, paper, wood, leather, synthetic leather, stone, concrete, ceramics, metals, metal oxides, ceramic industrial products, resin molded articles, porous resins, and porous fibers and the like.

There are no particular limitations on the types of fibers that may be used, and examples include natural fibers such as cotton, wool, silk and cellulose, synthetic fibers such as polyester, polyamide, acrylic and aramid, chemical fibers such as rayon, viscose rayon and lyocell, mixed spun fibers of natural fibers and synthetic fibers, and mixed spun fibers of natural fibers and chemical fibers. Examples of the fibers in those cases where the fibrous fabric is a nonwoven fabric include polyethylene, polypropylene, polyolefin, polyethylene terephthalate, polytetrafluoroethylene, glass and rayon.

Although there are no particular limitations on the thickness of the fibrous fabric, the thickness is typically within a range from 0.01 to 5 mm.

Examples of the material for the porous resin include polypropylene, polyethylene terephthalate and polytetrafluoroethylene.

Examples of the material for the porous fibers include glass fibers, cellulose nanofibers, carbon fibers and cellulose acetate.

One preferred aspect of the article of the present invention is an air filter in which the filter material has been treated with the composition of the invention.

Examples of the material for the filter material include glass fiber, polyolefin fiber, natural fiber, and polytetrafluoroethylene fiber, and glass fiber is preferred for cleanroom use. The filter material formed from glass fiber is preferably a nonwoven fabric.

(Method for Producing Article)

An article of the present invention is produced by treating a substrate with the composition of the invention.

Any method that enables the composition of the invention to be adhered to the substrate may be used as the treatment method, and in those cases where the composition of the invention contains a medium, examples include methods in which the composition of the invention is adhered to the substrate using a conventional coating method such as coating, impregnation, dipping, spraying, brushing, padding, size pressing or roller application, and the composition is then dried. In those cases where the substrate is a nonwoven fabric, a method in which the composition of the invention is adhered during the molding step for the nonwoven fabric may also be used. When the substrate is a wet nonwoven fabric (wet-laid), a method in which the composition of the invention is added to the suspension of fibers used in forming the nonwoven fabric in order to adhere the composition to the substrate, and the substrate is then dried, may also be used.

The treatment method used when the substrate is a filter material preferably includes dipping the filter material in a treatment liquid containing the composition of the invention, and then drying the filter material. The treatment liquid may be prepared by diluting the composition of the invention with a dilution medium if necessary, and then adding any co-agents that may be required. The dilution medium is preferably water. Examples of the co-agents include anionic acrylic resins, fluorine-based surfactants and non-fluorine-based surfactants. The solid mass concentration of the treatment liquid is preferably within a range from 0.2 to 5% by mass.

Although there are no particular limitations on the amount of the solid mass within the water- and oil-repellent agent composition that is adhered to the substrate, in those cases where, for example, the substrate is a fibrous fabric, a solid mass within a range from 0.001 to 0.05 g/g per unit mass of the fibrous fabric is preferred.

The drying may be conducted at normal temperatures or under heating, and is preferably conducted under heating. When heating is used, the heating temperature is preferably within a range from 40 to 200°C. Further, in those cases where the composition of the present invention contains a crosslinking agent, the composition is preferably heated, if necessary, to a temperature as least as high as the crosslinking temperature in order to achieve curing.

[Examples]

Hereinafter, the present invention is described in further detail using a series of examples, but the present invention is not limited to these specific examples. Room temperature means $20\pm10°C$. "Parts" means "parts by mass".

Examples 1 to 5 are examples of the invention, and examples 6 to 12 are comparative examples.

(Molecular Weight)

<Recovery of fluorine-containing polymer>

First, 6 g of the fluorine-containing polymer dispersion was added dropwise to 60 g of a mixed solution containing 54 g of 2-butanol and 6 g of hexane, and the resulting mixture was stirred to precipitate a solid. Centrifugal separation at 3,000 rpm was conducted for 5 minutes, and the thus obtained solid was separated. Subsequently, 9 g of isopropyl alcohol and 21 g of ion-exchanged water were added to the separated solid, and the resulting mixture was stirred thoroughly. Following centrifugal separation at 3,000 rpm for 5 minutes, the obtained solid was separated from the supernatant and dried overnight under vacuum at 35°C to obtain the fluorine-containing polymer.

<Measurement of Mn and Mw>

The recovered fluorine-containing polymer was dissolved in a mixed solvent of a fluorine-based solvent (AK-225 manufactured by AGC Inc.) and tetrahydrofuran in a ratio of 6/4 (v/v), thus forming a solution with a solid mass concentration of 1 % by mass, and this solution was then filtered through a 0.2 $\mu$m filter to obtain an analysis sample. The analysis sample was then subjected to GPC measurement to measure Mn and Mw. The measurement conditions were as follows.

Apparatus: HLC-8220GPC manufactured by Tosoh Corporation
Columns: Mixed-C and 100A columns manufactured by Polymer Laboratories Ltd. connected in series
Mobile phase: a mixed solution containing the fluorine-based solvent (AK-225 manufactured by AGC Inc.) and tetrahydrofuran in a ratio of 6/4 (v/v)
Flow rate: 1 mL/minute
Oven temperature: 37°C
Sample concentration: 1% by mass
Injection volume: 50 $\mu$L
Detector: RI
Molecular weight standards: polymethyl methacrylate

(Average Particle Size)

A dilute liquid was prepared by diluting the fluorine-containing polymer dispersion with water to obtain a solid mass concentration of 1% by mass, the scattering intensity was then measured at $25\pm2°C$ using a dynamic light scattering photometer (ELS-Z2 manufactured by Otsuka Electronics Co., Ltd.), and by analyzing the obtained autocorrelation function using the cumulant method, the average particle size of the emulsified particles of the fluorine-containing polymer was measured.

(Compatibility)

A treatment liquid prepared by diluting the fluorine-containing polymer dispersion with water to obtain a solid mass concentration of 0.5% by mass and an anionic acrylic resin (DICFINE GM-3K, manufactured by DIC Corporation) were mixed together to achieve a solid mass ratio of 1:1, and after leaving the mixture to stand for 60 minutes at room temperature, the presence of any precipitation was evaluated by visual inspection.

A: absolutely no precipitation
B: slight precipitation
C: considerable precipitation

(Water Pressure Resistance)

An air filter was subjected to the water resistance measurement prescribed in JIS L 1092 under conditions including a rate of pressure increase of 60 mbar/minute, and the pressure at which three droplets of water passed through the filter or the pressure at which the air filter ruptured was deemed the water pressure resistance. The water pressure resistance is preferably 200 mmH$_2$O or higher.

(Water Absorption Rate)

Using the formula below, the change in mass of the air filter from before to after the water pressure resistance measurement was used to calculate the water absorption rate. The water absorption rate is preferably less than 60%.

$$\text{Water absorption rate (\%)} = (\text{mass (g) of air filter after water pressure resistance}$$

$$\text{measurement - mass (g) of air filter before water pressure resistance measurement) / mass}$$

$$\text{(g) of air filter before water pressure resistance measurement} \times 100$$

(Outgas)

Measurement was conducted using the headspace GC-MS method, and the amount of generated volatile component (outgas) was evaluated against the following criteria.
Evaluation criteria:

A: outgas component of less than 1,000 ppm
C: outgas component of 1,000 ppm or higher

The analysis conditions for the headspace GC-MS method were as follows.
Apparatus: Agilent 7697A (headspace sampler), Agilent 7890B (GC system), and Agilent 5977MSD (MS system) (all manufactured by Agilent Technologies, Inc.) Headspace conditions:

Heating temperature: 80°C
Heating time: 60 minutes
Loop volume: 1 mL GC conditions:
Column: VF-1301 (length: 60 m, inner diameter: 0.25 mm, membrane thickness: 1 μm)
Flow rate: helium 1.0 mL/minute
Gasification chamber temperature: 250°C
Oven temperature: held at 40°C for 5 minutes, then raised at 10°C/minute, subsequently held at 260°C for 13 minutes, raised at 10°C/minute, and then held at 280°C for 5 minutes
Split ratio: 2511

MS conditions:

Transfer line temperature: 250°C
Ion source temperature: 230°C
Ionization method: EI
Scan range: 10 to 700

(Monomers)

C6FMA: $CH_2=C(CH_3)C(O)O-(CH_2)_2-(CF_2)_6F$
BeMA: behenyl methacrylate (number of carbon atoms in alkyl group: 22)
C20MA: arachidyl methacrylate (number of carbon atoms in alkyl group: 20)
StMA: stearyl methacrylate (number of carbon atoms in alkyl group: 18)
LMA: lauryl methacrylate (number of carbon atoms in alkyl group: 12)
BeMA-70: a mixture containing 70% by mass of BeMA, 15% by mass of C20MA, and 15% by mass of StMA
VCM: vinyl chloride
DOM: dioctyl maleate

The proportions (% by mass) of each of the monomers in the BeMA-70 were calculated by analyzing the BeMA-70 by gas chromatography, and determining the surface area ratio between the peaks of the various monomers. The gas chromatography analysis conditions were as follows.

Apparatus: HP-6850 manufactured by Agilent Technologies, Inc.
Column: DB-1 manufactured by Agilent J&W, Inc. (inner diameter: 0.25 mm, membrane thickness: 1 $\mu$m, length: 60 m)
Injection volume: 1 $\mu$L
Injection temperature: 325°C
Detection temperature: 325°C
Oven temperature: held at 40°C for 5 minutes, then raised at 20°C/minute, and subsequently held at 325°C for 20 minutes
Detector: FID
Split ratio: 100/1

(Nonionic Surfactants)

SFY465: an acetylene glycol ethylene oxide adduct (Surfynol 465 manufactured by Nissin Chemical Industry Co., Ltd., number of added moles of ethylene oxide: 10)
E430: a polyoxyethylene oleyl ether (EMULGEN 430 manufactured by Kao Corporation, number of added moles of ethylene oxide: approximately 30)

(Cationic Surfactant)

AQ18: an aqueous solution containing 63% by mass stearyl trimethyl ammonium chloride and 32% by mass isopropyl alcohol (LIPOQUAD 18-63 manufactured by Lion Specialty Chemicals Co., Ltd.)

(Polymerization Initiator)

V-601: dimethyl-2,2'-azobis(2-methylpropionate)

(Molecular Weight Modifier)

n-DoSH: normal-dodecylmercaptan

(Media)

Water: ion-exchanged water
DPG: dipropylene glycol (boiling point at atmospheric pressure: 232°C)

(Examples 1 to 12)

A glass autoclave was charged with the monomers (excluding the VCM), the surfactants (wherein the amount of AQ18 indicates the amount of the active component), the molecular weight modifier and the media shown in Table 1, and after heating at 55°C for 60 minutes, a high-pressure emulsifier (manufactured by Nissei Corporation) was used to conduct a pretreatment at 10 MPa and then a main treatment at 50 MPa, thus obtaining an emulsion. The thus obtained emulsion was placed in a stainless steel reactor and cooled to a temperature of 30°C or lower. The polymerization initiator shown in Table 1 was then added, and after substituting the gas phase inside the reactor with nitrogen, an amount of VCM shown in Table 1 was added, and a polymerization was conducted under stirring at 65°C for 15 hours, thus obtaining a fluorine-containing polymer dispersion. The monomer composition (the proportion of each monomer relative to the entire monomer component), the solid mass concentration of the fluorine-containing polymer dispersion, and the molecular weight values (Mn and Mw) and average particle size for the fluorine-containing polymer are shown in Table 2.

The obtained fluorine-containing polymer dispersion was diluted with water to achieve a solid mass concentration of 0.5% by mass, thus preparing a treatment liquid. The compatibility of this treatment liquid was then evaluated. The results are shown in Table 2.

A glass fiber filter paper (GB-100R manufactured by Advantech Toyo Kaisha, Ltd.) was immersed at room temperature for three minutes in the above treatment liquid. Subsequently, the glass fiber filter paper was removed from the treatment liquid and sandwiched between sheets of a water-absorbent paper, and a weight was then placed on top to remove any excess treatment liquid, resulting in a wet pickup of 600%. This glass fiber filter paper was then subjected to a heat treatment at 130°C for 15 minutes, thus obtaining a sample equivalent to an air filter. The sample was evaluated for water pressure resistance, water absorption rate and outgas. The results are shown in Table 2.

[Table 1]

| Blend amount (parts) | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Monomers | C6FMA | 75 | 75 | 75 | 72 | 78 | 75 | 75 | 75 | 89 | 87 | 86 | 68 |
| | BeMA-70 | 20 | 20 | 20 | 25 | 17 | | | | 5 | 5 | 9 | 31 |
| | BeMA | | | | | | 20 | | | | | | |
| | StMA | | | | | | | 20 | | | | | |
| | LMA | | | | | | | | 20 | | | | |
| | VCM | 5 | 5 | 5 | 3 | 5 | 5 | 5 | 5 | 6 | 6 | 5 | 1 |
| | DOM | | | | | | | | | | 2 | | |
| Surfactants | SFY465 | 3 | 3 | 3 | 3 | 3 | 3 | 3 | 3 | 3 | 3 | 3 | 3 |
| | E430 | 3 | 3 | 3 | 3 | 3 | 3 | 3 | 3 | 3 | 3 | 3 | 3 |
| | AO18 | 0.4 | | | | | 0.4 | 0.4 | 0.4 | 0.4 | 0.4 | 0.4 | 0.4 |
| Polymerization initiator | V-601 | 0.3 | 0.3 | 0.3 | 0.3 | 0.3 | 0.3 | 0.3 | 0.3 | 0.3 | 0.3 | 0.3 | 0.3 |
| Molecular weight modifier | n-DoSH | 0.35 | 0.35 | 0.35 | 0.35 | 0.35 | 0.35 | 0.35 | 0.35 | 0.35 | 0.35 | 0.35 | 0.35 |
| Media | DPG | 10 | 10 | | | | 10 | 10 | 10 | 10 | 10 | 10 | 10 |
| | Water | 185 | 185 | 185 | 185 | 185 | 185 | 185 | 185 | 185 | 185 | 185 | 185 |

[Table 2]

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Monomers composition (% by mass) | C6FMA | 75 | 75 | 75 | 72 | 78 | 75 | 75 | 75 | 89 | 87 | 86 | 68 |
| | BeMA | 14 | 14 | 14 | 17.5 | 11.9 | 20 | | | 3.5 | 3.5 | 6.3 | 21.7 |
| | C20MA | 3 | 3 | 3 | 3.75 | 2.55 | | | | 0.75 | 0.75 | 1.35 | 4.65 |
| | StMA | 3 | 3 | 3 | 3.75 | 2.55 | | 20 | | 0.75 | 0.75 | 1.35 | 4.65 |
| | LMA | | | | | | | | 20 | | | | |
| | VCM | 5 | 5 | 5 | 3 | 5 | 5 | 5 | 5 | 6 | 6 | 5 | 1 |
| | DOM | | | | | | | | | | 2 | | |
| Solid mass (% by mass) | | 35.4 | 35.6 | 35.6 | 35.5 | 35.5 | 35.3 | 35.7 | 35.5 | 35.4 | 35.5 | 34.9 | 35.4 |
| Molecular weight | Mn | 29,500 | 28,700 | 29,300 | 28,700 | 29,900 | 28,600 | 29,100 | 28,100 | 28,700 | 29,200 | 28,600 | 28,300 |
| | Mw | 66,000 | 65,000 | 64,000 | 63,000 | 65,000 | 62,000 | 64,000 | 63,000 | 65,000 | 66,000 | 61,000 | 64,000 |
| Average particle size (nm) | | 165 | 178 | 185 | 189 | 190 | 172 | 163 | 159 | 152 | 153 | 163 | 162 |
| Water pressure resistance ($mmH_2O$) | | 210 | 210 | 220 | 215 | 200 | 190 | 185 | 170 | 180 | 180 | 185 | 185 |
| Water absorption rate (%) | | 50 | 50 | 40 | 40 | 55 | 60 | 65 | 70 | 80 | 80 | 65 | 70 |
| Compatibility | | B | A | A | A | A | B | B | B | C | C | B | B |
| Outgas | | C | C | A | A | A | C | C | C | C | C | C | C |

The samples treated with the treatment liquids of Examples 1 to 5 exhibited higher water pressure resistance and lower water absorption rates than the samples treated with the treatment liquids of Examples 6 to 12.

The treatment liquids of Examples 2 to 5, which did not contain a cationic surfactant, exhibited excellent compatibility.

The samples treated with the treatment liquids of Examples 3 to 5, which contained no organic solvents with a boiling point at atmospheric pressure of 280°C or lower, exhibited suppressed levels of outgas.

[Industrial Applicability]

The water- and oil-repellent agent composition of the present invention is able to produce an article having a high water pressure resistance and a low water absorption rate, and can therefore be used in applications that require these characteristics, such as air filters, oil filters, dust collection filters, cartridge filters, bag filters, and filter papers and the like.

All of the content within the description, claims and abstract of prior Japanese Patent Application No. 2020-124144, filed July 21, 2020 is referenced herein, and incorporated within the disclosure of the present invention.

**Claims**

1. A water- and oil-repellent agent composition comprising a fluorine-containing polymer having a unit based on a monomer (a) described below, a unit based on a monomer (b1) described below, a unit based on a monomer (b2) described below, a unit based on a monomer (b3) described below, and a unit based on a monomer (c) described below, wherein

   relative to all units that constitute the fluorine-containing polymer, a proportion of the unit based on the monomer (a) is from 70 to 80% by mass, a proportion of a combination of the unit based on the monomer (b1), the unit based on the monomer (b2) and the unit based on the monomer (b3) is from 12 to 28% by mass, and a proportion of the unit based on the monomer (c) is from 2 to 8% by mass.

   Monomer (a): a compound represented by $(Z-Q)_nX$

   wherein Z is a polyfluoroalkyl group of 1 to 6 carbon atoms or a group represented by $C_jF_{2j}+_1O(CFX^1CF_2O)_kCFX^2-$, j is an integer of 1 to 6, k is an integer of 0 to 10, $X^1$ and $X^2$ each independently represent a fluorine atom or a trifluoromethyl group,

   Q is a divalent organic group or a single bond,

   n represents 1 or 2, and

   when n is 1, X is a group represented by $-CR=CH_2$, $-C(O)OCR=CH_2$, $-OC(O)CR=CH_2$, $-OCH_2-\varphi-CR=CH_2$ or $-OCH=CH_2$, and when n is 2, X is a group represented by $-CH[-(CH_2)_mCR=CH_2]-$, $-CH[-(CH_2)_mC(O)OCR=CH_2]-$, $-CH[-(CH_2)_mOC(O)CR=CH_2]-$ or $-OC(O)CH=CHC(O)O-$, wherein R represents a hydrogen atom, a methyl group or a halogen atom, $\varphi$ represents a phenylene group, and m is an integer of 0 to 4.

   Monomer (b1): a monomer not having a polyfluoroalkyl group, but having an alkyl group of 22 carbon atoms.

   Monomer (b2): a monomer not having a polyfluoroalkyl group, but having an alkyl group of 20 carbon atoms.

   Monomer (b3): a monomer not having a polyfluoroalkyl group, but having an alkyl group of 18 carbon atoms.

   Monomer (c): a halogenated olefin.

2. The water- and oil-repellent agent composition according to Claim 1, wherein relative to the combination of the unit based on the monomer (b1), the unit based on the monomer (b2) and the unit based on the monomer (b3), a proportion of the unit based on the monomer (b1) is from 60 to 80% by mass, a proportion of the unit based on the monomer (b2) is from 10 to 20% by mass, and a proportion of the unit based on the monomer (b3) is from 10 to 20% by mass.

3. The water- and oil-repellent agent composition according to Claim 1 or 2, wherein each of the monomer (b1), the monomer (b2) and the monomer (b3) is an acrylate or a methacrylate.

4. The water- and oil-repellent agent composition according to any one of Claims 1 to 3, wherein Z in the monomer (a) is a polyfluoroalkyl group of 1 to 6 carbon atoms, n is 1, and X is a group represented by $-CR=CH_2$ or $-OC(O)CR=CH_2$.

5. The water- and oil-repellent agent composition according to Claim 4, wherein Z in the monomer (a) is a polyfluoroalkyl group of 6 carbon atoms.

6. The water- and oil-repellent agent composition according to any one of Claims 1 to 5, wherein the composition does not contain a cationic surfactant.

7. The water- and oil-repellent agent composition according to any one of Claims 1 to 6, wherein the composition does not contain any organic solvent with a boiling point at atmospheric pressure of 280°C or lower.

8. A method for producing a water- and oil-repellent agent composition containing a fluorine-containing polymer by polymerizing a monomer component in presence of a polymerization initiator, wherein

the monomer component comprises a monomer (a) described below, a monomer (b1) described below, a monomer (b2) described below, a monomer (b3) described below and a monomer (c) described below,
relative to a total amount of the monomer component, a proportion of the monomer (a) is from 70 to 80% by mass, a proportion of a combination of the monomer (b1), the monomer (b2) and the monomer (b3) is from 12 to 28% by mass, and a proportion of the monomer (c) is from 2 to 8% by mass.
Monomer (a): a compound represented by $(Z-Q)_nX$
wherein Z is a polyfluoroalkyl group of 1 to 6 carbon atoms or a group represented by $C_jF_{2j}+_1O(CFX^1CF_2O)_kCFX^2-$, j is an integer of 1 to 6, k is an integer of 0 to 10, $X^1$ and $X^2$ each independently represent a fluorine atom or a trifluoromethyl group,
Q is a divalent organic group or a single bond,
n represents 1 or 2, and
when n is 1, X is a group represented by $-CR=CH_2$, $-C(O)OCR=CH_2$, $-OC(O)CR=CH_2$, $-OCH_2-\varphi-CR=CH_2$ or $-OCH=CH_2$, and when n is 2, X is a group represented by $-CH[-(CH_2)_mCR=CH_2]-$, $-CH[-(CH_2)_mC(O)OCR=CH_2]-$, $-CH[-(CH_2)_mOC(O)CR=CH_2]-$ or $-OC(O)CH=CHC(O)O-$, wherein R represents a hydrogen atom, a methyl group or a halogen atom, $\varphi$ represents a phenylene group, and m is an integer of 0 to 4.
Monomer (b1): a monomer not having a polyfluoroalkyl group, but having an alkyl group of 22 carbon atoms.
Monomer (b2): a monomer not having a polyfluoroalkyl group, but having an alkyl group of 20 carbon atoms.
Monomer (b3): a monomer not having a polyfluoroalkyl group, but having an alkyl group of 18 carbon atoms.
Monomer (c): a halogenated olefin.

9. The method for producing a water- and oil-repellent agent composition according to Claim 8, wherein relative to the combination of the monomer (b1), the monomer (b2) and the monomer (b3), a proportion of the monomer (b1) is from 60 to 80% by mass, a proportion of the monomer (b2) is from 10 to 20% by mass, and a proportion of the monomer (b3) is from 10 to 20% by mass.

10. The method for producing a water- and oil-repellent agent composition according to Claim 8 or 9, wherein each of the monomer (b1), the monomer (b2) and the monomer (b3) is an acrylate or a methacrylate.

11. The method for producing a water- and oil-repellent agent composition according to any one of Claims 8 to 10, wherein the monomer component is polymerized in a medium containing water, in presence of the polymerization initiator and a surfactant.

12. The method for producing a water- and oil-repellent agent composition according to Claim 11, wherein the surfactant does not include a cationic surfactant.

13. The method for producing a water- and oil-repellent agent composition according to Claim 11 or 12, wherein the medium does not contain any organic solvent with a boiling point at atmospheric pressure of 280°C or lower.

14. An article that has been treated with the water- and oil-repellent agent composition according to any one of Claims 1 to 7.

15. The article according to Claim 14, wherein the article is an air filter.

## INTERNATIONAL SEARCH REPORT

| | International application No. |
|---|---|
| | PCT/JP2021/024172 |

A.  CLASSIFICATION OF SUBJECT MATTER
C09K 3/18(2006.01)i; D06M 15/277(2006.01)i
FI: C09K3/18 102; D06M15/277
According to International Patent Classification (IPC) or to both national classification and IPC

B.  FIELDS SEARCHED

Minimum documentation searched (classification system followed by classification symbols)
C09K3/18; D06M15/277

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C.  DOCUMENTS CONSIDERED TO BE RELEVANT

| Category* | Citation of document, with indication, where appropriate, of the relevant passages | Relevant to claim No. |
|---|---|---|
| A | WO 2018/164140 A1 (AGC INC.) 13 September 2018 (2018-09-13) examples | 1-15 |
| A | WO 2019/188369 A1 (AGC INC.) 03 October 2019 (2019-10-03) examples | 1-15 |
| A | WO 2019/172021 A1 (AGC INC.) 12 September 2019 (2019-09-12) examples | 1-15 |
| A | JP 2017-534590 A (THE CHEMOURS COMPANY FC, LLC) 24 November 2017 (2017-11-24) examples 32-34 | 1-15 |
| A | KR 10-2018-0127895 A (MYPOLYMER CO., LTD.) 30 November 2018 (2018-11-30) examples | 1-15 |

☐  Further documents are listed in the continuation of Box C.  ☒  See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 25 August 2021 (25.08.2021) | 07 September 2021 (07.09.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

International application no.

PCT/JP2021/024172

| Patent Documents referred in the Report | Publication Date | Patent Family | Publication Date |
|---|---|---|---|
| WO 2018/164140 A1 | 13 Sep. 2018 | US 2019/0283080 A1 examples<br>EP 3540026 A1<br>CN 110312777 A<br>KR 10-2019-0127658 A | |
| WO 2019/188369 A1 | 03 Oct. 2019 | TW 201940586 A examples | |
| WO 2019/172021 A1 | 12 Sep. 2019 | TW 201938752 A examples | |
| JP 2017-534590 A | 24 Nov. 2017 | US 2016/0090392 A1 examples 32-34<br>WO 2016/048643 A1<br>EP 3197903 A1<br>KR 10-2017-0060106 A<br>CN 107001397 A | |
| KR 10-2018-0127895 A | 30 Nov. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007291373 A
- JP 2014098082 A

- JP 2009215370 A
- JP 2020124144 A